# EUROPEAN PATENT APPLICATION

(11) **EP 3 031 781 A1**
(43) Date of publication of application: **15.06.2016**
(21) Application number: 14835306.3
(22) Date of filing: 08.08.2014
(51) Int. Cl.: C02F 3/20

(54) **AIR DIFFUSER AND MEMBRANE BIO-REACTOR**

(30) Priority: 08.08.2013 KR 20130094319; 08.04.2014 KR 20140041940; 06.08.2014 KR 20140101287
(71) Applicant: Lotte Chemical Corporation, Dongjak-gu Seoul 07071 (KR)
(72) Inventor: BAEK, Mi-Hwa, Daejeon 305-720 (KR); JANG, Hong Jin, Seoul 120-807 (KR); KIM, Jong Pyo, Daejeon 305-721 (KR); LEE, Jin Won, Daejeon 305-721 (KR); KANG, Gyung-Bo, Daejeon 305-745 (KR); PARK, Sung Ryul, Daejeon 305-720 (KR)
(74) Representative: Tischner, Oliver
(86) International application number: PCT/KR2014/007396
(87) International publication number: WO 2015/020485

(57) **Abstract**

The present invention relates to an air diffuser including an air diffusing pipe in which at least two pore groups including two or more pores are formed, and a membrane bioreactor including the same.

## Description

### [TECHNICAL FIELD]

The present invention relates to an air diffuser and a membrane separation bioreactor, and more particularly to an air diffuser which can effectively discharge and disperse air or air bubbles with a small amount of air, provide excellent cleaning effects in the field of application including a membrane separation bioreactor, reduce the amount of air to be used and electric power consumption, and increase the operation efficiency of the membrance bioreactor, and a membrane separation bioreactor including the above air diffuser.

### [BACKGROUND ART]

A membrane bioreactor (MBR) process is called an activated sludge membrane separation process or a membrane-bound activated sludge process, and it is a method for treatment of sewage or wastewater containing high concentrations of organic or inorganic materials.

This membrane bioreactor replaces a separation membrane for solid-liquid separation by precipitation used in a standard activated sludge process or a modified standard activated sludge method that has been previously known, and thus a high concentration of microorganisms (MLSS, mixed liquor suspended solids) can be cultured, which makes it possible to greatly reduce the site area required for installation of the whole device or system used, and to secure stable water quality while enhancing processing efficiency.

However, since the membrane bioreactor undegoes solid-liquid separation in the separation membrane by using a suction action, the air diffuser for injecting air is installed in the lower part of the bioreactor in order to reduce contamination of the separation membrane and remove contaminants from the membrane, and it was common to use generated bubbles to do so.

Previously, a method for resolving problems encountered with a pressure distribution which appears when operating air diffusers or a method for more uniformly generating bubbles in the air diffusers and the like have been known, but a method for more efficiently reducing or removing the contaminants from the separation membrane of the MBR while using a small amount of air is not commercially available.

### [DISCLOSURE OF INVENTION]

### [TECHNICAL PROBLEM]

It is an object of the present invention to provide an air diffuser which can effectively discharge and disperse air or air bubbles with a small amount of air, provide excellent cleaning effects in the field of application including a membrane separation bioreactor, reduce the amount of air to be used and electric power consumption, and increase the operation efficiency of the membrane bioreactor.

It is another object of the present invention to provide a membrane separation bioreactor including the above-mentioned air diffuser.

### [TECHNICAL SOLUTION TO PROBLEM]

There is provided an air diffuser including an air diffusing pipe in which at least two pore groups including two or more pores are formed.

Also, there is provided a membrane separation bioreactor which includes: a bioreacotor; one or more separation membrane modules installed in the bioreactor; and the air diffuser installed in the lower part of the separation membrane module.

Hereinafter, the air diffuser and the membrane separation bioreactor according to specific embodiments of the invention will be described in more detail.

According to one embodiment of the present invention, the air diffuser including an air diffusing pipe in which at least two pore groups including two or more pores are formed can be provided.

In previously known air diffusers, it was usual for pores for discharging air to be distributed at regular intervals or distributed randomly. However, in these air diffusers, it was not easy to adjust the air dischared from the pores or the shape or flow of the bubbles generated therefrom. Furthermore, it was not easy to distribute the pressure in the apparatus applied due to the air dischared from the pores or the flow of the bubbles generated therefrom, for example, in the separation membrane of the membrane bioreactor and the like.

Thus, the present inventors conducted numerous researches and experiments regarding the air diffuser and determined that, when a plurality of pore groups including two or more pores are formed on the air diffusing pipes, it can effectively discharge and disperse air or air bubbles with a small amount of air, provide excellent cleaning effects in the field of application including a membrane separation bioreactor, reduce the amount of air to be used and electric power consumption, and increase the operation efficiency of the membrance bioreactor. The present invention has been completed on the basis of such a finding.

As used herein, the term "pore group" refers to a group composed of two or more pores that are formed on the air diffuser, and the distance between the pores included in one pore group is smaller than the distance to the pores contained in the other pore group, and thereby this can be classified into one group on the air diffuser.

Moreover, two or more pores are gathered to form a single pore group, and such pore group is present in two or more air diffusing pipes. Thus, in the air diffuser of one embodiment described above, the air bubble discharged through the pores can coalesce. The air bubble thus coalesced forms a large air bubble, and such large air bubble increases or slug-flows in the apparatus (for examle, a membrane bioreactor, etc.) installed with the above air diffuser.

The air diffuser allows even formation of large bubbles of a uniform size.

The pore group may include more than two pores. Specifically, it may include 2 to 6 pores, or 3 to 5 pores.

The distance between pore groups adjacent to each other which are formed in the air diffusing pipe can be from 25 mm to 150 mm, from 30 mm to 120mm, or from 40 mm to 100 mm.

When the distance between the pore groups adjacent to each other is too small, the above-mentioned pores cannot substantially form a group and thus it is difficult to implement the above-mentioned bubble coalescence or a slug flow of the large air bubble. Therefore, it is not easy to obtain the above-mentioned effects.

Further, when the distance between the pore groups adjacent to each other is too large, the slug flow of the large air bubble is not uniformly formed throughout the separation membrance, thereby the cross flow in a perpendicular direction to the permeable water permeated on the surface of the separation membrane and the upflow formed from a lower part to an upper part cannot be made smoothly. Thus, the local separation membrane contamination occurs and the air diffusing efficiency may be reduced.

The pore groups may be arranged in a row in the longitudinal direction of the air diffusing pipe from the surface of the air diffusing pipe.

The air diffuser including the air diffusing pipe may be installed in the membrane separation bioreactor, and the pore groups formed in the air diffusing pipe may be formed to face the separation membrane module contained in the separation membrane bioreactor.

In particular, the pore groups formed on the surface of the air diffusing pipe may be arranged on a virtual straight line passing through all of them.

Alternatively, all the pore groups may be present within two virtual lines in which the width of the pore group including two pores most widely distributed in the width direction of the air diffusing pipe is extended in the longitudinal direction of the air diffusing pipe.

The above pore groups can be arranged in a row in the longitudinal direction of the air diffusing pipe from the surface of the air diffusing pipe, but all of them do not need to have the same distribution pattern. The arrangement in a row as described above also includes not only the arrangement in a full straight line but also a case in which a constant error in the virtual straight line passing through the pore groups, for example the position error of the center of the pore group, is less than 7 %, and the arrangement appears substantially in a row

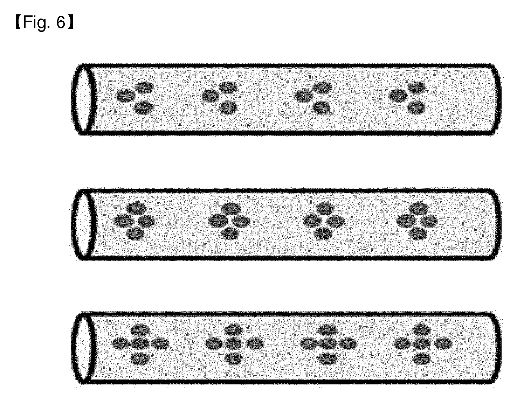

The schematic pattern of the air diffusing pipes contained in the air diffuser according to one embodiment of the present invention is shown in Fig. 6.

However, Fig. 6 only shows one example of the air diffusing pipe of the above embodiment, and the specific configuration of the air diffuser according to one embodiment of the present invention is not limited thereto.

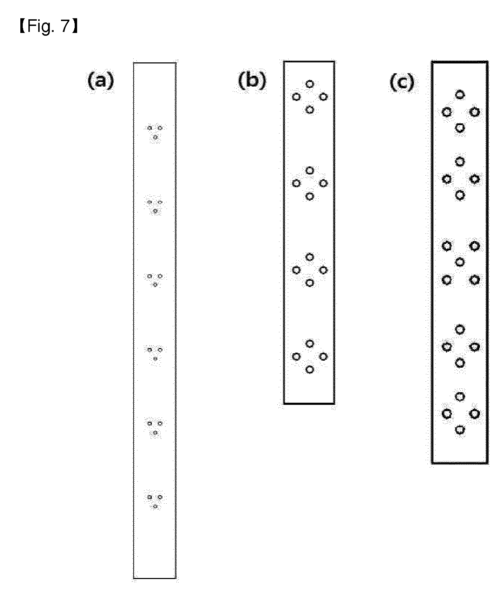

In addition, Fig. 7 schematically shows a plan view of the air diffusing pipe contained in the air diffuser according to one embodiment of the present invention.

However, Fig. 7 shows a plane view of the air diffusing pipe contained in the air diffuser according to the above embodiment and one example concerning the content of the pores contained in the air diffusing pipe, and the specific configuration of the air diffuser according to one embodiment of the present invention is not limited thereto.

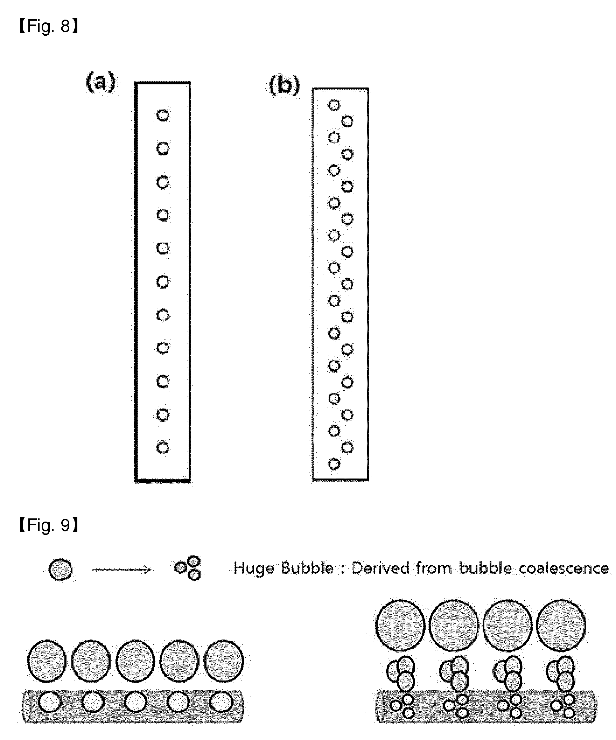

As shown in Fig. 8, in previously known air diffusing pipes, for example, merely in the case where pores are formed in one row or two rows at regular intervals on the air diffusing pipes, it is difficult to implement the above-mentioned bubble coalescence or slug flow of the large air bubble and thus it is not easy to achieve the above-mentioned effects.

As said pores group includes 2 to 6, or 3 to 5 pores, the air bubbles discharged through the pores can be easily coalesced together, and the slug flow of the large air bubbles can be stably formed in a balanced manner.

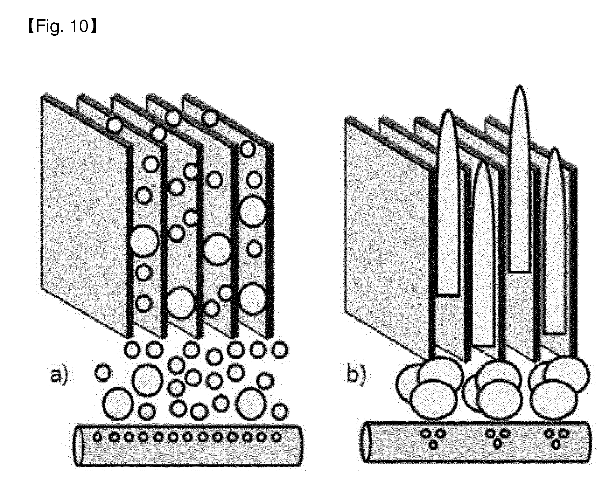

The schematic contents concerning the formation of a slug flow of the large air bubbles as described above are shown in Fig. 9. The schematic diagram concerning the phenomenon in which the large air bubbles increase or cause slug flow within the membrane separation bioreactor is shown in Fig. 10.

The distance between the pores contained in one pore group may range from 1 mm to 20 mm, from 4 mm to 12 mm, or from 5 mm to 10 mm.

The distance between the pores contained in a pore group may be defined as a distance between the center point of each pore and the center point of the pores adjacent to it.

The center point of the pores may be a center point of a circle in which all of the front surfaces of the pores are included.

As the distance between the pores contained in one pore group is specified within the above range, the air bubbles discharged through the pores as described above can be easily coalesced together and the large air bubbles can be stably formed in a balanced manner.

The maximum diameter of the pores may range from 0.5 mm to 10 mm, or from 1 mm to 5 mm.

When the size of the pore is too small, the pressure applied to the air generated through the pores increases and thus energy loss becomes large. Also, the size of the air bubbles to be discharged from the pores becomes too small and thus formation of the air bubbles is difficult. In addition, the formed large bubbles cannot make the slug flow.

Further, when the size of the pore is too large, air diffusion rapidly occurs from the pores close to the inlet thus causing problems in pressure distribution for the entire air diffusing pipe which is likely to cause the nonuniform air diffusion.

In addition, when the size of the pore is too large, the function or effect due to the formation of the pore group may be reduced by half, and it is difficult to implement the above-mentioned bubble coalescence or slug flow of the large air bubble. Therefore, it is not easy to obtain the above-described effects.

The cross-section of said pores on the surface of the air diffusing pipe can have a circular shape, an elliptical shape, or a polygonal shape with 3 to 30 vertices.

On the other hand, the specific shape or size of the air diffusing pipe may vary depending on the actually applied device, but the air diffusing pipe may have a pipe shape with an outer diameter of 10 mm to 100 mm or an inner diameter of 1 mm to 90 mm.

The shape of the perpendicular cross-section to the longitudinal direction of the air diffusing pipe is not particularly limited, but for example, it may be circular, elliptical, or polygonal with 3 to 30 vertices.

In addition, the specific material for the above air diffusing pipe is not particularly limited, but for example, a thermoplastic plastic such as PVC or a metal can be used for the production of the air diffusing pipe.

On the other hand, the air diffusing pipe may further include a side surface pore which is formed at positions corresponding to 1/5 or 1/3 of the entire circumference of the cross-section perpendicular to the longitudinal direction of the air diffusing pipe from the pore group.

If the side surface pore located spaced apart from said pore group is formed at a position corresponding to 1/5 to 1/3 of the entire circumference of the cross-section perpendicular to the longitudinal direction of the air diffusing pipe from the pore group, the bubbles generated at the side surface pore can coalesce with the air bubbles discharged through the pore group to form a large bubble. Also, the floating materials and other residue remaining inside the air diffusing pipe are discharged through the side surface pores and thus it is possible to wash the air diffusing pipe and remove the contaminants of the separation membrance bioreactor.

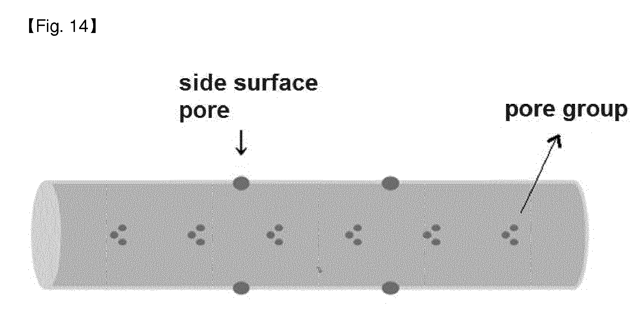

As described above, the side surface pore can, when it is based on the cross-section perpendicular to the longitudinal direction of the air diffusing pipe, be formed at a position corresponding to 1/5 to 1/3 of the entire circumference of the cross-section perpendicular to the longitudinal direction of the air diffusing pipe from the pore group. As shown in Fig. 14, in a plane view showing the pore group, the side surface pores are present in the outermost side of the plane surface of the air diffusing pipe.

The above side surface pores may be formed on the surface of the air diffusing pipe while two form one pair so as to be opposite to each other from the air diffusing pipe. At least two pairs of the side surface pores can be formed on the surface of the air diffusing pipe.

The number of the side surface pores is not particularly limited, but each of the side surface pores can be formed at two to ten equally divided positions in the longitudinal direction of the air diffusing pipe.

The maximum diameter size of the side surface pore is not particularly limited. However, in order to easily form a large air bubble, wash the air diffusing pipe, and improve the contamination control performance of the air diffusing pipe, the maximum diameter of the side surface pore may range from 5 mm to 20 mm.

Further, the maximum diameter of the side surface pore may be 1.5 to 3 times the maximum diameter of the pores contained in each of the pore groups.

When the side surface pores have a larger diameter than the pores contained in each of the above pore groups, the slug flow occurs within the air diffusing pipe, inflow and outflow of residue such as sludge in large pores is easier, and the sludge attached due to an increase in pressure in the pores contained in the pore group may be discharged in a larger amount in the side surface pore of the air diffusing pipe.

As described above, the air diffuser according to one emboidment of the invention can be used in the membrane bioreactor (MBR).

Further, the air diffuser according to one embodiment of the invention may further include other components which are generally known other than the air diffusing pipe in order to be used in the membrane bioreactor.

For example, the air diffuser according to one embodiment of the invention may further include a gas injection unit, connected with the air diffusing pipe, for injecting gas into the air diffusing pipe.

This gas injection unit that can be used includes an electric valve for securing the safety of the air injection and providing a change in the operation method, a solenoid valve for the intermittent injection or pulp injection, and the like. This gas injection unit may be provided outside the membrane bioreactor or inside the bioreactor.

In addition, the air diffuser according to one embodiment of the invention may further include a gas distribution unit for distributing the gas injected from the gas injection unit to the air diffusing pipe.

According to another embodiment of the invention, a membrane separation bioreactor including a bioreactor, at least one separation membrane module installed in the bioreactor, and the air diffuser installed in the lower end of the separation membrane module can be provided.

As described above, by using the air diffuser according to one embodiment of the invention, it can effectively discharge and disperse air or air bubbles with a small amount of air, provide excellent cleaning effects in the field of application including a membrane bioreactor, reduce the amount of air to be used and electric power consumption, and increase the operation efficiency of the membrance bioreactor.

In particular, by using the air diffuser according to one embodiment of the invention, the air bubbles discharged through the pores of the air diffuser can coalesce, and the air bubbles thus coalesced form a large air bubble. This large air bubble increases or causes slug flow within the membrane bioreactor.

The air diffuser allows the large bubbles to evenly form at a uniform size.

In response to the periodic flow of such large air bubbles, contaminants that may be produced on the separation membrane of the membrane bioreactor can be easily removed even with a smaller amount of air, and the phenomenon in which contaminants are accumulated on the separation membrane can be minimized.

Specific contents relating to the air diffuser include all of the contents described in the above embodiment.

The bioreactor is the part which conducts biological purification by using microorganisms in the treatment of the sewage or wastewater. The part in which the separation membrane is immersed is called an aeration tank or an aerobic tank among the bioreactor. This part serves to decompose the organic materials and it can have a rectangular, square, or circular shape and the like.

The size of the bioreactor is not particularly limited, but for example, it may have a size of 100 m³ to 20,000 m³ on average per aeration tank.

At least one separation membrane module installed in the bioreactor is installed in the form of an airlift inside the aeration tank or the separation membrane tank or outside the tank in the bioreactor represented as a standard activated sludge method or a modified standard activated sludge method and the like. This module is the part that acts as a so-called solid-liquid separator which separates activated sludge and purified water. The module may be an immersion type or a pressurized type, depending on the installation position or operation method and the like of the separation membrane.

Further, this separation membrane module is in the form of a flat membrane, and includes components of the unit consisting of a separation membrane, an element (including a panel or spacer and the like), a module, and a module assembly.

The separation membrane module may include a hollow fiber membrane. The materials of the flat membrane and the hollow fiber membrane are not particularly limited, but typically it is possible to use those in which the hydrophobic material, polyvinylidene fluoride (PVDF), is modified into a hydrophilic material by using the surface treatment, the hydrophilization, and the additives.

Further, in addition to PVDF, an aromatic polymer material such as polysulfone (PSF) or polyethersulfone (PES), and a linear polymer material such as acrylonitrile (PAN), cellulose acetate (CA), or cellulose triacetate (CTA) can be used.

Between the flat membrane and the hollow fiber membrane, the pores having a size of 5 µm to 0.0005 µm may be formed in a plural number.

The separation membrane module can be installed in the upper space between the pore groups contained in the air diffuser.

In particular, the above separation membrane module can be formed variously depending on the air diffusing direction of the air diffuser, the air injection direction (vertically or horizontally), and the method of designing the manifold.

On the other hand, the distance between the separation membrane module and the air diffuser can range from 5 mm to 400 mm.

If the distance between the separation membrane module and the air diffuser is too small, the air bubbles discharged through the pores of the air diffuser are hardly coalesced or the growth of the air bubbles due to the bubble coalescence cannot provide enough space to be formed over the whole separation membrane. Therefore, the number of the air diffusers increases and thus energy consumption efficiency may be reduced.

In addition, if the distance between the separation membrane module and the air diffuser is too large, the air bubbles discharged through the pores of the air diffuser coalesce and thus the stability of the formed large air bubbles is decreased or it may not be easy for the large air bubbles to penetrate into the separation membrane module.

Thereby, the effect of large and strong bubble coalescence due to the adjustment of the ratio of air/water is reduced by half, which inhibits the smooth formation of the slug flow.

On the other hand, the membrane separation bioreactor according to the embodiment of the invention may further include: an injection unit for injecting the sewage inside the bioreactor; an air injection unit for injecting air from outside into the bioreactor; an inlet of cleaning air or cleaning liquid which is introduced for the cleaning of the air diffuser; or a discharge unit for discharging the treated water treated in the bioreactor; and a conveying unit which is responsible for conveying from the bioreactor.

### [ADVANTAGEOUS EFFECTS OF THE INVENTION]

According to the present invention, an air diffuser which can effectively discharge and disperse air or air bubbles with a small amount of air, provide excellent cleaning effects in the field of application including a separation membrane bioreactor, reduce the amount of air to be used and electric power consumption, and increase the operation efficiency of the membrance bioreactor, and a separation membrane bioreactor including the air diffuser, can be provided.

### [BRIEF DESCRIPTION OF THE DRAWING]

Fig. 1 is a photograph obtained by observing the operating process of the membrane bioreactor of Example 1.
Fig. 2 is a photograph obtained by observing the operating process of the membrane bioreactor of Example 2.
Fig. 3 is a photograph obtained by observing the operating process of the membrane bioreactor of Examples 3 through 6.
Fig. 4 is a photograph obtained by observing the operating process of the membrane bioreactor of Examples 7 through 10.
Fig. 5 is a photograph obtained by observing the operating process of the membrane bioreactor of Comparative Example 1.
Fig. 6 schematically illustrates the air diffusing pipe contained in the air diffuser according to one embodiment of the invention.
Fig. 7 schematically illustrates a plane view of the air diffusing pipe contained in the air diffuser according to one embodiment of the invention.
Fig. 8 schematically illustrates a plane view of the conventional air diffusers.
Fig. 9 is a schematic diagram briefly illustrating the slug flow of the air bubbles generated in the air diffusing pipe contained in the air diffuser according to one embodiment of the invention and the conventional air diffuser.
Fig. 10 is a schematic diagram briefly illustrating the flow pattern of the air bubbles generated in the membrane bioreacter when using the air diffusing pipe contained in the air diffuser according to one embodiment of the invention and the conventional air diffuser.
Fig. 11 is a graph illustrating the pattern in which pressure applied to the vacuum pump is changed with the lapse of time, when a flow rate of 20 L/min was injected in the membrane bioreactor of Example 11 and Comparative Example 2 in Experimental Example 2.
Fig. 12 is a graph illustrating the pattern in which pressure applied to the vacuum pump is changed with the lapse of time, when a flow rate of 30 L/min was injected in the membrance bioreactor of Example 11 and Comparative Example 2 in Experimental Example 2.
Fig. 13 is a graph showing the measurement result of the cross-flow velocity as measured in Experimental Example 3.
Fig. 14 schematically illustrates the plane view of the air diffusing pipe contained in the air diffuser according to Example 12.
Fig. 15 is a photograph obtained by observing the process operated by varying the amount of air to be injected in the air diffuser of Example 12.
Fig. 16 is a photograph showing that the sludge is discharged in the air diffusing pipe of Example 12.

### [DETAILED DESCRIPTION OF THE EMBODIMENTS]

Specific embodiments of the invention will be explained in detail in the following examples. However, these examples are only to illustrate specific embodiments of the invention, and the scope of the invention is not limited thereto.

### < Examples 1 through 10 and Comparative Example 1: Operation of the air diffuser and the membrane bioreactor >

In a bioreactor with a volume of 200 L, a separation membrane with a size of 150 mm X 300 mm (length X width) was installed by four sheets(a total of 8 sides, in both sides) at 8 mm intervals. The air diffuser was installed at a predetermined distance from the above separation membrane.

A polyacrylonitrile (PAN) ultrafiltration membrane (size of pore: about 0.07 µm) was used as the separation membrane. The longest diameter of each of the pores formed on the surface of the air diffusing pipe contained in the air diffuser, the number of pores contained in the pore groups, the distance between the pores in the pore groups, the distance between the pore groups, and the distance between the separation membrance module and the air diffuser are shown in Table 1 below.

Tap water was filled in such membrane bioreactor, and the operation was conducted while injecting air in an amount of 10 L/min (unit) within the range from 10 L/min to 30 L/min. The formation of the slug flow and the behavior of the bubbles dispersed throughout the separation membrane were observed by an ultrahigh-speed camera.

**[Table 1] Formation aspects of the pores on the air diffuser of examples and a comparative example**

| | Longest diameter of pores | Number of pores contained in pore groups | Distance between the pores in pore groups | Distance between pore groups | Distance between the membrance module and the air diffuser |
|---|---|---|---|---|---|
| Example 1 | About 2 mm | 3 | 7 mm | 37.5 mm | 40 mm |
| Example 2 | About 2 mm | 4 | 7 mm | 37.5mm | 40 mm |
| Example 3 | About 2 mm | 3 | 8 mm | 37.5mm | 40mm |
| Example 4 | About 2 mm | 3 | 7 mm | 37.5 mm | |
| Example 5 | About 2 mm | 4 | 8 mm | 37.5 mm | |
| Example 6 | About 2 mm | 4 | 7 mm | 37.5 mm | |
| Example 7 | About 4 mm | 3 | 10 mm | 83.3 mm | 160 mm |
| Example 8 | About 4 mm | 3 | 9 mm | 83.3 mm | |
| Example 9 | About 4 mm | 4 | 10 mm | 83.3mm | |
| Example 10 | About 4 mm | 4 | 9 mm | 83.3 mm | |
| Comparative Example 1 | About 2 mm | 4 | No distance between groups (pores are arranged in series at 7 mm interval | No distance between groups | 120 mm |

### < Experimental Example 1: Observation of the operation of the membrane bioreactor of Examples 1 through 10 and Comparative Example 1>

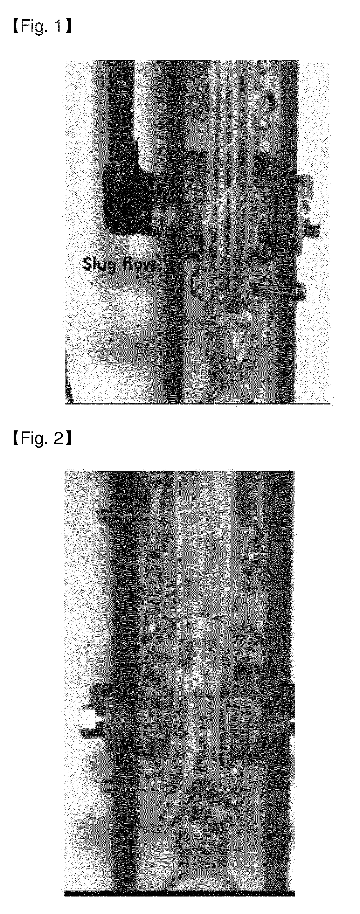

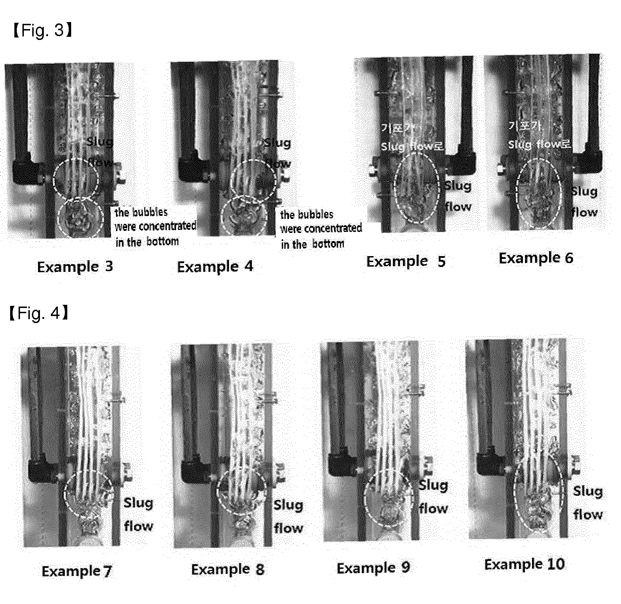

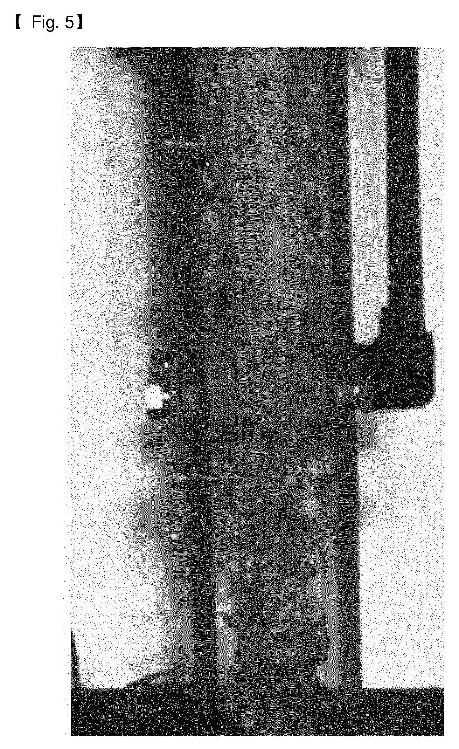

(1) As shown in Figs. 1 and 2, as the operation of the membrane bioreactors of Examples 1 and 2 was conducted, the phenomenon in which the air bubbles generated in the air diffuser were coalesced was observed, and the slug flow in which the large bubbles formed by coalescence of the air bubbles moved to the separation membranbe module could be confirmed.
   As shown in Figs. 3 and 4, the above phenomenon was confirmed in the course of operating the membrance bioreactor of Examples 3 through 10.
(2) In contrast, when operating the membrane bioreactor of Comparative Example 1 (FIG. 5), it was difficult to substantially observe the phenomenon in which the air bubbles generated in the air diffuser were coalesced. Further, it was possible to observe the appearance in which each of the air bubbles passed between the separation membrane module while moving upward.

### < Examples 11 and Comparative Example 2>

In a bioreactor with a volume of 200 L, a separation membrane with a size of 150 mm X 300 mm (length X width) was installed by four sheets(a total of 8 sides, in both sides) at 8 mm intervals. The air diffuser was installed at a predetermined distance from the above separation membrane.

A polyacrylonitrile (PAN) ultrafiltration membrane (size of pore: about 0.07 µm) was used as the separation membrane. The longest diameter of each of the pores formed on the surface of the air diffusing pipe contained in the air diffuser, the number of pores contained in the pore groups, the distance between the pores in the pore groups, the distance between the pore groups, and the distance between the separation membrance module and the air diffuser are shown in Table 2 below.

In such membrane bioreactor, artificial wastewater including artificial organic contaminants such as insoluble organic materials, sugars, and lipids were filled, and the operation was conducted while injecting air in an amount of 30 L/min. The pressure applied to the vacuum pump used in the separation membrance (transmembrane pressure, TMP) was measured.

### [Operating conditions]

(1) Flux: 15.4 LMH (L/m²m²/h)
(2) Mode of operation: running for 9 min and suspending for 1 min
(3) Concentration of organic materials (wt%): 0.035

**[Table 2] Formation aspects of the pores on the air diffuser of the Example 11 and Comparative Example 2 [lengh of the air diffuser: 150 mm]**

| | Longest diameter of pores | Number of pores contained in pore groups | Distance between the pores in the pore groups | Distance between pore groups | Distance between the membrance module and the air diffuser |
|---|---|---|---|---|---|
| Example 11 | About 2 mm | 3 [Total 4 groups] | 7 mm | 37.5 mm | 40 mm |
| omparative Example 2 | About 2 mm | - | No distance between groups [23 pores are arranged in series] | - | 120 mm |

### < Experimental Example 2: Observation of the operation of the membrane bioreactor of Example 11 and Comparative Example 2>

Experiments were conducted by injecting at flow rates of 20 L/min and 30 L/min in the membrane bioreactors of Example 11 and Comparative Example 2.

### 1. Injecting the flow rate of 20 L/min

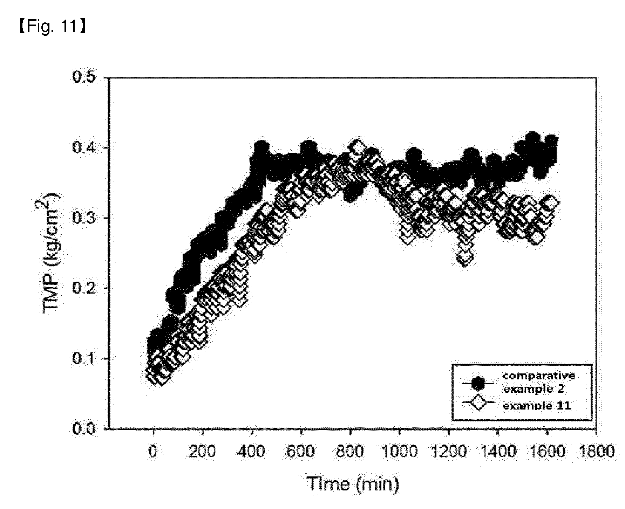

As shown in Fig. 11, it was confirmed that, when a flow rate of 20 L/min was injected in the membrane bioreactors of Comparative Example 2, the speed of increasing the transmembrane pressure was relatively high and the transmembrane pressure was continuously increased during use for a relatively long period of time.

On the other hand, the membrane bioreactor of Example 11 showed that the speed of increasing the transmembrane pressure was relatively slow, and the transmembrane pressure was maintained at 0.4 Kg/cm² or less even after prolonged use of more than 1000 min.

### 2. Injecting the flow rate of 20 L/min

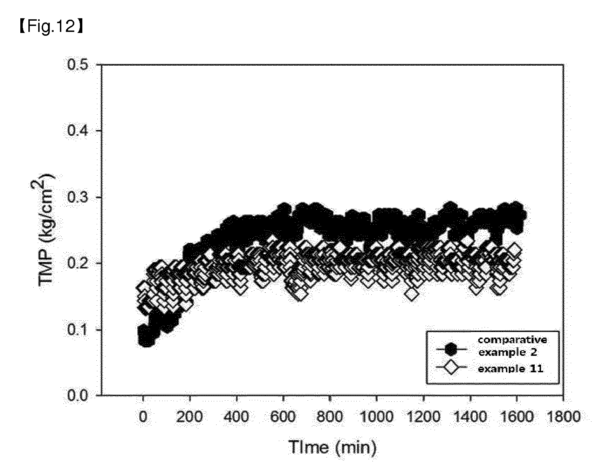

As shown in Fig. 12, the membrane bioreactor of Comparative Example 12 showed that, in the experiment continuously conducted for 100,000 s,
the transmembrane pressure (TMP) was continuously increased to 0.2 Kg/cm² or more.

In contrast, the membrane bioreactor of Example 11 showed that, although the experiments were conducted by injecting at the same flow rate of 30 L/min, the speed of increasing the transmembrane pressure was relatively slow, and the transmembrane pressure was maintained within the range of around 0.2 Kg/cm² even after operation for 200 min or more, and the time taken to reach the limited transmembrane pressure (not less than about 0.5 on average) was relatively longer.

Thus, the cycle of washing the separation membrane of Example 11 could be significantly improved, and economical operation conditions of the membrane bioreactor could be achieved.

### < Experimental Example 3: Measurement of upward flow rate (cross-flow velocity) by the air diffuser >

Clean water was filled in a water bath of a size of 400 mm X 500 mm X 700 mm (WxLxH) and air at 15 to 30 L/min was injected in the air diffusers of Example 11 and Comparative Example 2, respectively, and the flow rates of water/air formed by the air diffusers were compared to measure the cross-flow velocity.

In particular, for the measurment of the flow rate, the separation membrane with a size of 150 mm X 300 mm (length X width) was installed by four sheets(a total of 8 sides, in both sides) at 8 mm intervals, and the air diffuser was installed at a predetermined distance from the separation membrane. Thereby, the cross-flow velocity generated by the air diffuser was indirectly measured by floating sodium alginate beads and then analyzing the movement distance of each bead per frame by the ultrahigh speed camera.

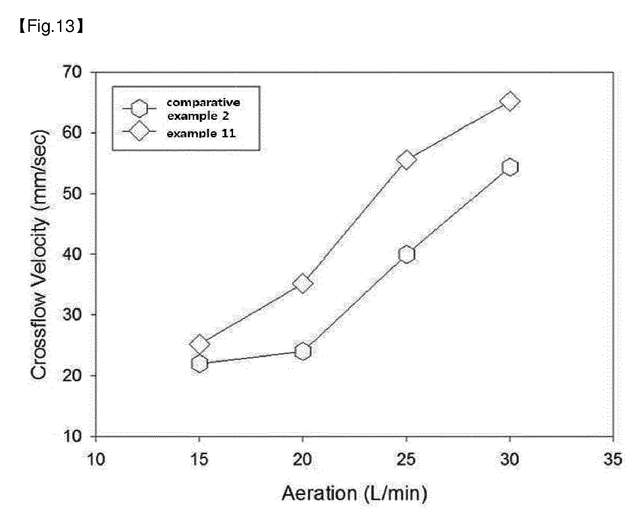

As shown in Fig. 13, it could be confirmed that, in the case of injecting the same amount of air of 15 to 30 L/min, the air diffuser of Example 11 exhibited about 10 % to 20 % higher cross-flow velocity as compared with when using the air diffuser of Comparative Example 2.

Thus, it is expected that, when using the air diffuser of Example 11, it can better increase the cross-flow velocity even by using the same energy, thus reducing the energy required for adjusting the contaminants of the spearation membrane and extending the cleaning cycle of the separation membrane, as compared with when using the air diffuser of Coparative Example 2.

### < Example 12>

In a bioreactor with a volume of 200 L, a separation membrane with a size of 150 mm X 300 mm (length X width) was installed by four sheets(a total of 8 sides, in both sides) at 8 mm intervals, and the air diffuser was installed at a predetermined distance from the separation membrane.

A polyacrylonitrile (PAN) ultrafiltration membrane (size of pore: about 0.07 µm) was used as the separation membrane. The longest diameter of each of the pores formed on the surface of the air diffusing pipe contained in the air diffuser, the number of pores contained in the pore groups, the distance between the pores in the pore groups, the distance between the pore groups, and the distance between the separation membrance module and the air diffuser are shown in Table 3 below.

In such membrane bioreactor, artificial wastewater including artificial organic contaminants such as insoluble organic materials, sugars, and lipids was filled, and the operation was conducted while injecting air in an amount from 30 L/min. The pressure applied to a vacuum pump used in the separation membrance (transmembrane pressure, TMP) was measured.

### [Operating conditions]

(1) Flux: 15.4 LMH (L/m²/h)
(2) Mode of operation: running for 9 min and suspending for 1 min
(3) Concentration of organic materials (wt%): 0.035

**[Table 3] Formation aspects of the pores on the air diffuser of Example 12 [length of the air diffuser: 150 mm]**

| | Longest diameter of pores contained in the pore groups | Number of pores contained in the pore groups | Distance between the pores in the pore groups | Distance between the pore groups | Distance between the membrane e module and the air diffuser | Longest diameter of side pores | Number and internval of side pores |
|---|---|---|---|---|---|---|---|
| Example 12 | About 3 mm | 3 [Total 6 groups] | 7 mm | 37.5 mm | 40mm | About 6 mm | 2 pairs/75mm |

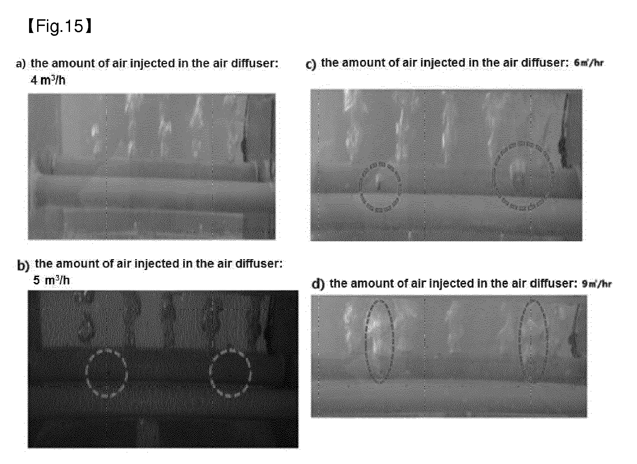

As shown in a) to d) of Fig. 15, as result of operating the membrane bioreactor including the air diffuser according to Example 12, when the operation was conducted by setting the amount of air injected in the air diffuser at 4 to 5 m³/h, the air bubbles discharged through the pore groups could be coalesced and the air bubbles thus coalesced allowed generation of the large air bubbles, thus further increasing the cross-flow velocity even by using the same energy.

In addition, when the amount of air to be injected in the air diffuser increases up to about 10 m³/h, bubbles are generated from the side surface pores formed in the air diffusing pipe and thus the production and action of the large bubbles can made more smoothly, and floating materials and other residue remaining inside the air diffusing pipe are discharged through the side surface pores.

In particular, as shown in c) of Fig. 15, if the amount of air to be injected into the air diffuser is 6 m³/h, the phenomenon wherein the air bubbles generated from the side surface pores are coalescend with the air bubbles discharged through the pore groups was confirmed. As shown in d) of Fig. 15, if the amount of air to be injected into the air diffuser is 9 m³/h, the air bubbles generated from the side surface pores are coalesced with the air bubbles discharged through the pore groups to form a large air bubble.

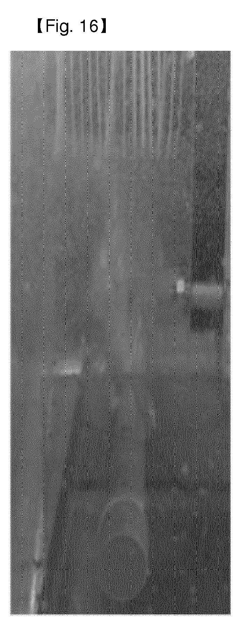

Thus, when changing the amount of air to be injected into the air diffuser, for example, when repeating the processes of maintaining the operation by using the amount of air to be injected into the air diffuser at 4 to 5 m³/h, and changing the amount of air injected into the air diffuser to 6 to 10 m³/h, the slug flow was generated inside the air diffusing pipe and thus sludge attached through inflow and outflow of residue such as sludge in large pores and an increase in the pressure in small pores could be discharged in large pores of the air diffusing pipe. Fig. 16 shows the appearance of this sludge to be discharged.

## Claims

1. An air diffuser comprising an air diffusing pipe in which at least two pore groups including two or more pores are formed.

2. The air diffuser of claim 1,
wherein the distance between pore groups adjacent to each other among the pore groups is 25 mm to 150 mm.

3. The air diffuser of claim 1, wherein the maximum diameter of pores contained in each of the pore groups is 0.5 mm to 10 mm.

4. The air diffuser of claim 1, wherein the pore groups are arranged in a row in the longitudinal direction of the air diffusing pipe from the surface of the air diffusing pipe.

5. The air diffuser of claim 1, wherein the pore groups include 2 to 6 pores.

6. The air diffuser of claim 1, wherein the distance between the pores contained in the one pore group is 1 mm to 20 mm.

7. The air diffuser of claim 1, wherein the cross-section of the pores has a circular shape, an elliptical shape, or a polygonal shape with 3 to 30 vertices.

8. The air diffuser of claim 1,
wherein the air diffusing pipe has a pipe shape with an outer diameter of 10 mm to 100 mm or an inner diameter of 1 mm to 90 mm.

9. The air diffuser of claim 1,
wherein the pore groups are formed, respectively, at 4 to 25 equally divided positions in the longitudinal direction of the air diffusing pipe.

10. The air diffuser of claim 1,
wherein the air diffusing pipe further comprises a side surface pore which is formed at a position corresponding to 1/5 to 1/3 of the entire circumference of the cross-section perpendicular to the longitudinal direction of the air diffusing pipe from the pore group.

11. The air diffuser of claim 10,
wherein at least one pair of the side surface pores opposite to each other are formed on the surface of the air diffusing pipe.

12. The air diffuser of claim 10,
wherein the side surface pores are respectively formed at two to ten equally divided positions in the longitudinal direction of the air diffusing pipe.

13. The air diffuser of claim 10,
wherein the maximum diameter of the side surface pore is 5 mm to 20 mm.

14. The air diffuser of claim 10,
wherein the maximum diameter of the side surface pore is 1.5 to 3 times the maximum diameter of the pores contained in each of the pore groups.

15. The air diffuser of claim 1, wherein the material of the air diffusing pipe is a thermoplastic plastic or a metal.

16. The air diffuser of claim 1,
which further comprises a gas injection unit, connected with the air diffusing pipe, for injecting gas into the air diffusing pipe; and
a gas distribution unit for distributing the gas injected from the gas injection unit to the air diffusing pipe.

17. A membrane separation bioreactor comprising: a bioreactor;
at least one separation membrane module installed in the bioreactor; and
the air diffuser of claim 1 installed in the lower end of the separation membrane module.

18. The membrane separation bioreactor of claim 17,
wherein the separation membrane module is installed in a upper space between the pore groups contained in the air diffuser, and
the distance between the separation membrane module and the air diffuser is 5 mm to 400 mm.

19. The membrane separation bioreactor of claim 17,
wherein the separation membrane module includes a hollow fiber membrane.

20. The membrane separation bioreactor of claim 17, which further comprises:
an injection unit for injecting the sewage inside the bioreactor;
an air injection unit for injecting air from outside into the bioreactor; or a discharge unit for discharging the treated water treated in the bioreactor.
